Europäisches Patentamt

European Patent Office

Office européen des brevets

(11) Publication number: **0 172 881**

**B1**

(12) EUROPEAN PATENT SPECIFICATION

(45) Date of publication of patent specification: 21.09.88

(21) Application number: 85901191.8

(22) Date of filing: 08.02.85

(86) International application number:
PCT/US85/00188

(87) International publication number:
WO 85/03558 15.08.85 Gazette 85/18

(51) Int. Cl.⁴: **F 16 J 15/32**

(54) UNITIZED DUAL-LIP SHAFT SEAL.

(30) Priority: 10.02.84 US 578861

(43) Date of publication of application:
05.03.86 Bulletin 86/10

(45) Publication of the grant of the patent:
21.09.88 Bulletin 88/38

(84) Designated Contracting States:
AT BE CH DE FR GB LI LU NL SE

(56) References cited:
EP-A-0 065 887
DE-C- 815 283
FR-A-1 508 575
FR-A-2 238 875
FR-A-2 296 800
FR-A-2 373 003
FR-A-2 430 555
US-A-3 955 859

(73) Proprietor: FEDERAL MOGUL CORPORATION
26555 N.W. Highway
Southfield Michigan 48034 (US)

(72) Inventor: PICHLER, Gerald, T.
1620 Robindale
Dearborn, MI 48128 (US)
Inventor: NASH, Stephen, E.
29216 Greening Blvd.
Farmington Hills, MI 48018 (US)
Inventor: BROOKS, David, R.
4550 Curtis Road
Milford, MI 48042 (US)

(74) Representative: Baillie, Iain Cameron et al
c/o Ladas & Parry Isartorplatz 5
D-8000 München 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an improved dual-lip grease-retaining and dirt-excluding shaft seal.

Background of the invention

With customers demanding ever increasing quality and long life, automobile manufacturers have, in turn demanded more from the manufacturers of shaft seals. Some seals of the present invention are intended to be used on wheel spindles of automobiles, and to last without replacement for as long as 100,000 miles (160900 km), while retaining the grease and excluding grit, dirt, corroding liquids, and so on. The seals heretofore made have not had so long a life. Moreover, the seal is required to be installable in a very small space.

Exclusion of deleterious foreign matter is even more important than the retention of the grease, as in certain applications grease may be added to the wheel bearings from time to time in fact, it is desirable to have some grease flow out from the grease retaining seal lip into the space between the grease-retaining lip and the dirt-excluding lip, so as to lubricate both lips. It is not even harmful to have a small amount of grease expelled via the dirt-excluding lip during lubrication of the wheel bearings. However, the amount allowed to pass the grease-retaining lip should be kept very small.

In any event, there tends to be more wear at the dirt-excluding lip; because that lip is quite likely to come into contact with dirt, grit, dust and corroding liquids. It is also desirable to fling the outside foreign matter outwardly in such a way that it tends not to work its way to the dirt-excluding lip, but even with such flinging, there will still be a substantial amount of deleterious foreign matter attempting to pass by the lip over a period of driving an automobile 100,000 miles (160900 Km)

U.S. Patents Nos, 4,399,998 and 4,344,631 show some venting structure for seal lips, as does U.S. Patent 2,830,832, but none of these vents are suitable for use in the present seal.

It is also important that the seal be unitized, because with a precision product of this kind and of this size, wrong or careless installation can immediately ruin the sealing lips and lead to the manufacturer's having to make good his guarantee on the wheel bearings. Assembly line workers in automobile plants are often careless, and even though they may try to be careful, separate installation of a seal and then of a dirt flinging member or of a wear sleeve to go upon the shaft tends to produce misalignments which considerably shorten the life of the seal, and may in fact cause its ruin within a few miles of the running of the new car.

There are many unitized seal structures, including those shown in U.S. Patents Nos. 3,021,161; 3,108,815; 3,179,424; 3,685,841; 3,561,770; 4,028,057; and 4,285,526, but few, if any, are applicable to a seal as narrow as that of the present invention. A unitized dual lip seal is shown in FR—A—2 430 555, wherein the seal consists of a seal member fitted to a stationary bore, and a sleeve member fitted to a rotatable shaft. The seal member includes a metal case having a cylindrical wall press-fitted in the bore, and a radial flange extending inwardly toward the shaft. The radial flange has a dual lip elastomer seal bonded at the inner end of the flange, the lips of the seal diverging to provide a grease-retaining lip edge and a dirt-excluding lip edge. When assembled the seal lips engage a cylindrical portion of the sleeve member. The sleeve member has an outwardly disposed flange extending into the space between the cylindrical wall and radial flange of the metal case. The outer end of the cylindrical wall of the metal case has a plurality of fingers for detachable engagement with the outer end of the flange on the sleeve member.

To insure long life at the dirt exclusion seal, a very long lasting seal is desirable. It is possible to make a seal having many of the features of the present invention by using only a standard high quality elastomer such as acrylic rubber, butyl rubber, or an ethylene acrylic rubber (e.g., Vamac°, a Dupont° Reg. Trademark). However, the use of polytetrafluoroethylene, or an equivalent material, at the actual sealing edges is highly desirable. The incorporation of polytetrafluoroethylene becomes important due to the fact that the temperature of the seal during use may rise to between 300 and 350°F (149 and 177°C). Also the pressure from the grease side of the seal may rise to the range of 50 to 60 p.s.i (345 to 414 KPa) at up to about 120 rpm, which corresponds to vehicle speeds of 80 to 90 miles per hour (125 to 145 Km/h). Polytetrafluoroethylene also reduces the torque of the seal on the wear sleeve.

Since polytetrafluoroethylene cannot be readily and economically molded to complex shapes, it usually must be incorporated into the seal by using a wafer-like washer, as by bonding it to an elastomeric supporting member. The present invention does this to produce a novel product.

Polytetrafluoroethylene is shown bonded to elastomers in shaft seals in many patents, including U.S. Patents Nos. 3,495,843 and 4,239,243 and East German Patent No. 328,815, but, again the structure of the present invention do not appear to be known.

The present invention therefore provides a unitized grease seal including a seal member having a one-piece metal case with a cylindrical outer portion defining a wall with an outer surface adapted to be press-fitted into a stationary bore and an inner surface, an inwardly extending radial flange having a radially inner end, an outer face on the air side of said seal and an opposite inner face on the grease side of said seal, a molded elastomeric member bonded to said metal case and having a radially extending portion bonded to said outer face of said radial flange, said elastomeric member having an inner portion extending radially inwardly of said radially inner end of said radial flange and bonded thereto and having two diverging lip portions with a cavity therebetween, one of said lip portions being on the grease side of the seal and providing a grease-retaining lip edge and the other of said lip portions providing a dirt-excluding lip portion, a one-piece metal wear sleeve member having a radially inner cylindrical portion with an inner surface adapted to be press fitted on a rotatable shaft and an outer surface engaged by both said lip portions and having a larger outer diameter than the inner diameter of said lip portions before assembly with said wear sleeve, so that assembly of the wear sleeve on the seal member causes further spreading-apart of said two lip portions, said wear sleeve member also having a flange portion extending radially outwardly from the air side end of the wear sleeve's cylindrical portion and an inturned portion at an angle to said radial flange and extending axially into the space between said inner surface and inner end of said metal case, and the air-side end of said outer wall portion of said metal case, housing retaining means adapted for detachable engagement with said inturned portion of the wear sleeve, characterized in that said elastomeric member has an outer generally cylindrical portion which together with the radially extending portion completely covers the outer face of said radial flange, said retaining means comprising a series of radially inwardly extending retaining portions of said elastomeric member spaced circumferentially from each other and releasably engaging the outer end of the inturned portion of said wear sleeve and further characterized in that the dirt-excluding lip portion has a cylindrically extending recess therein, and a polytetrafluoroethylene sealing lip member fitting in said recess and bonded to said elastomer member and providing the sealing edge portion of said dirt excluding lip portion.

Further features and advantages of the invention will be apparent from the following description of preferred embodiments taken together with the accompanying drawings wherein:

Fig. 1 is a view in end elevation of a unitized dual-lip shaft seal embodying the principles of the invention.

Fig. 2 is a greatly enlarged view in section of one portion of the seal taken along the line 2—2 in Fig. 1.

Fig. 3 is a further enlarged view in cross section of the shaft element alone shown in its as-molded and trimmed position.

Fig. 4 is a similarly enlarged view of the wear sleeve.

Fig. 5 is a view similar to Fig. 2 of a modified form of the invention employing a differently shaped wear sleeve and a modified form of the outer portion of the outer seal of Fig. 2.

Fig. 6 is a view in section of approximately half of the lower parts of a mold for molding the shaft seal, shown with the mold open and the case, the polytetrafluoroethylene washer, and the raw elastomer placed in position.

Fig. 7 is a similar view of the mold in its closed position.

Fig. 8 is a fragmentary enlarged view in section of a portion of Fig. 7, showing the seal as molded and indicating the trim line.

Description of a preferred embodiment

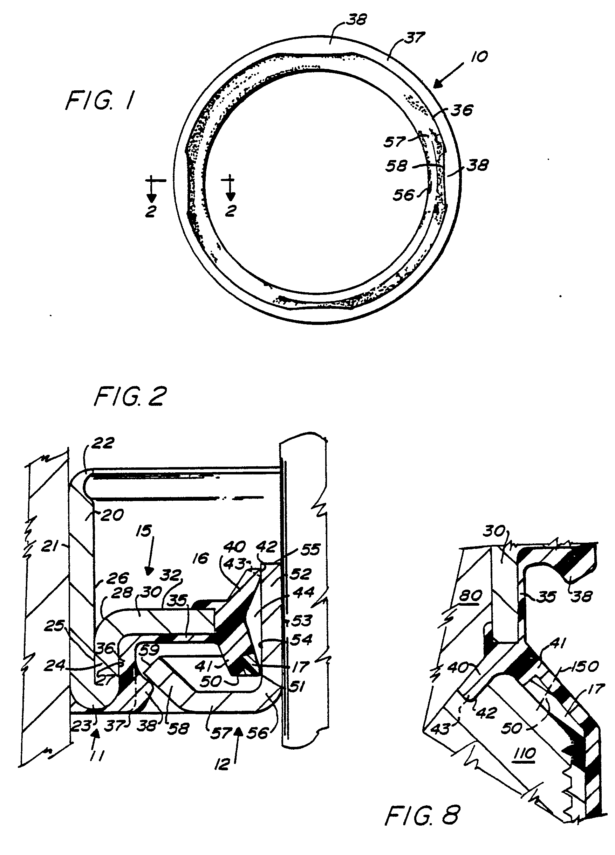

As shown in Fig. 1 a unitized seal 10 of the invention is a continuous annular device. As shown in Figs. 1 and 2, the seal 10 comprises a sealing member 11, and a wear sleeve member 12, which are assembled together in a manner resulting in unitization, so that the seal is installed as a unitized assembly 10, rather than having separate installation of its two major components 11 and 12.

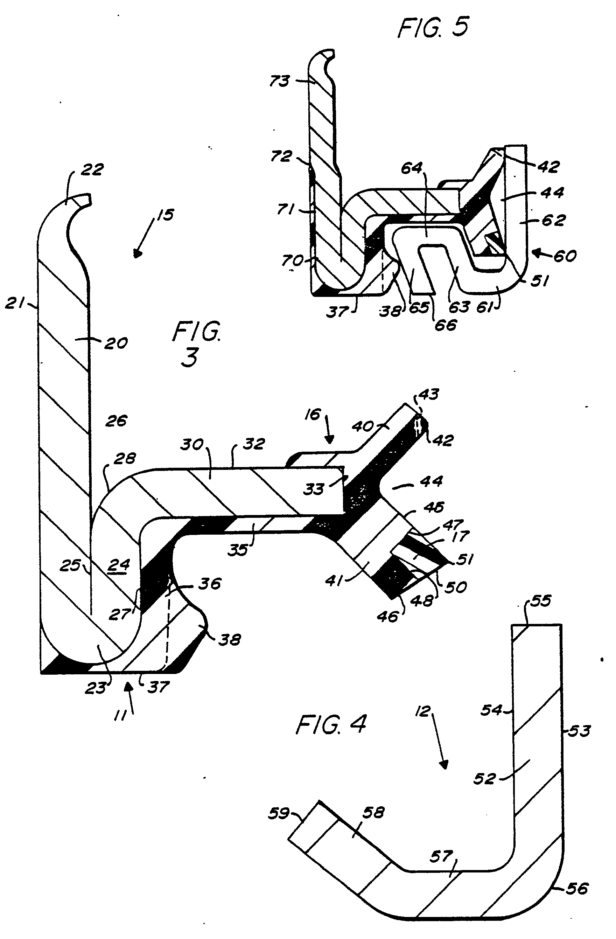

The elastomeric seal member 11 preferably comprises three major elements which are best seen in Fig. 3, which presents the as-molded and trimmed sealing member 11. This member 11 comprises a metal case member 15, an elastomeric member 16 which is bonded to the case 15, and a polytetrafluoroethylene insert 17 which is bonded to the elastomeric member 16.

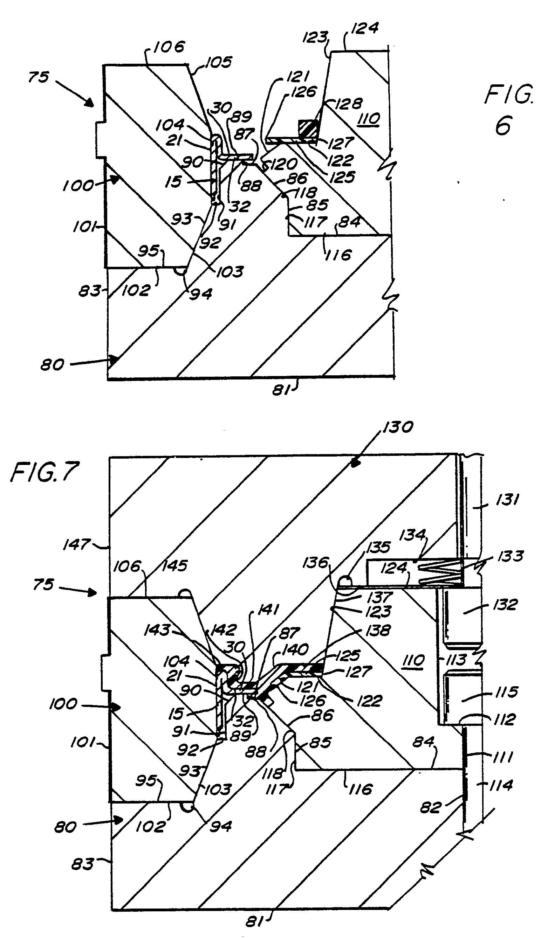

The case 15 is a unitary annular metal member shaped to provide a cylindrical outer portion 20 having an outer surface 21 for leak-tight engagment in the bore of a housing. The outer surface 21 is preferably coated with a suitable bore-locking material, not shown. One end 22 of the portion 20 is free and the other end 23 is curved back on itself to provide a short inner cylindrical portion 24 with its outer surface 25 bearing against the inner periphery 26 of the portion 20. The portion 24 has an inner surface 27, and it is curved inwardly at its end 28 to provide a radial flange 30 having an outer or airside surface 31, an inner or grease-side surface 32, and a radially inner end 33. To this end 33 and to the inner portions of the surfaces 31 and 32 is bonded the elastomeric sealing element 16. The actual molding will be described later, in conjunction with Figs. 6 and 7.

The elastomeric sealing element 16 may be of any suitable elastomer; it is a unitary member having a radially extending portion 35 bonded to the surface 31 of the radial flange 30, and an outer cylindrical portion 36 bonded to the surface 27 of the case 15. This cylindrical portion 36 is provided near its axial end 37 with a series, usually four, of inwardly directed projections 38 which provide short retaining members for holding the wear sleeve member 12 in its unitized position.

The radially inner portion of the elastomeric member 16 comprises two lip portions 40 and 41. The lip portion 40 comprises an as-molded lip edge 42 which need not be trimmed and which faces at an angle of about 45° away from the radial flange 30 of the case 15. It serves as the grease-retaining lip 40. Its lip edge 42 may have a slight curvature and is preferably provided with a series, preferably three, of short lip vents 43, which are equally spaced around the periphery, and may be, and preferably are, approximately 0.005" (0.127 mm) deep by 0.125" (3.175 mm) wide. The purpose of these vents 43 is to permit the entry of grease from the bearing chamber into a cavity 44 in between the two lips to keep the lips lubricated. The amount of grease desired there is relatively small, and therefore the vent passages 43 are quite small, so that they do not significantly interfere with grease retention.

The other sealing lip portion 41 is made considerably wider than the lip portion 40 to provide a good support for the polytetrafluoroethylene insert 17, which takes up approximately half the width of the lip portion 41 and which must be bonded to and securely retained by the elastomeric lip portion 41. Thus, the elastomer itself may be considered as having converging walls 45 and 46 and a recess having walls 47 and 48. Into the recess and flush with the walls 47 and 48 is the polytetrafluoroethylene member 17. The lip portion 41 and the tetrafluoroethylene member 17 have a common trimmed edge 50 which is not perpendicular to the wall 45 but is, instead, so trimmed that when the sealing member 11 is assembled on the wear sleeve member 12, the trimmed edge 50 will approach as closely as possible a right angle to the wear sleeve, as can be seen in Fig. 2. The limiting factor here is what the shape and dimensions of the seal enable the trimming knife to do without cutting any of the other parts. Typically this means that trim lies at an angle of about 30° to a plane parallel to the radial flange 30. The way in which the seal is made will be described later. In any event, the trimming results in an originally sharp sealing lip edge 51, that becomes blunted as the lip wears.

The wear sleeve member 12 is a formed metal member, preferably made from the kind of sheet steel usually used for this type of installation, typically treated with phosphoric acid or some similar solution. This member 12, as shown in Fig. 4, has a wear sleeve 52 proper, the inner periphery 53 of which fits snugly on a shaft, while its outer periphery 54 serves as the surface upon which the seal lips 42 and 51 run, as can be seen in Fig. 2. One end 55 facing the bearing is a free end, while at the other end 56 the wear sleeve member 12 is curved outwardly to provide a radially extending portion 57 followed by an angularly extending portion 58 that goes back in axially, toward the opposite end 55, terminating at an end 59. The ends 55 and 59 are cut off before the forming. The angular portion 58 is shown extending at an angle of about 45° to the radial portion 57, and the end 59 lies out beyond the projections 38 but spaced out from the inner surface of the cylindrical portion 36. Thus, the outer periphery 59 can be snapped into the four or more protuberances or retaining members 38 to unitize the seal 10. The spacing apart of the members 38 and the flexibility of the elastomer make assembly a very simple matter. When the members 11 and 12 are assembled to complete the seal 10 (Fig. 2) the two lips 42 and 51 are spread apart more widely than before (Fig. 3), and the cavity 44 between them is somewhat reduced in height, but is spread in width. The recesses 43 for admitting grease into the cavity 44 are operative, and the polytetrafluoroethylene sealing member 17 has its axially outer edge 50 substantially parallel to the radial portion 57 of the wear sleeve member 12, as well as to the radial flange 30 of the seal case 15.

The portions 57 and 58 of the wear sleeve member 12 act as a deflector and as a slinger, to free the seal as much as possible from water and corrosive liquids, as well as from dirt and dust.

To obtain somewhat better operation of this slinging-deflecting feature, the wear sleeve structure 60 shown in Fig. 5 may be used, although it is more difficult to form and therefore somewhat more expensive. In this instance, after a short radial portion 61 at the end of the wear sleeve proper 62, the metal has a portion 63 bent inwardly axially toward the opposite end of the wear sleeve 62, at approximately 90° and then has a bent-out portion 64 lying parallel to the radial flange 30, when installed, and then a final portion 65 is bent back at an acute angle to bring its end 66 out within the inner diameter of the retention members 38. This bending back results in leaving axially inside the members 38 the part of the portion 65 which is of greater diameter than the retaining members 38, though of lesser diameter than the cylindrical surface 36 from which the retaining members 38 project. This structure provides an improved slinging action, while taking up no more room. However, its practicality depends partly on the necessity for any greater slinging action, and on the additional costs involved.

As would probably be apparent any way, the exterior part of the case 15 may be at least partially coated with elatomer, as is also shown in Fig. 5. Here, an outer portion 70 of the elastomer is formed to cover the exterior surface 71 of an inwardly stepped portion 72 of the case. The rubber coating 70, since it is able to accommodate itself to the bore diameter by some flow towards its end, is made a little larger in diameter than the remaining portion 73 of the bore-engaging portion of the metal case.

Going now to the method of manufacture of the seal, a preferred such method incorporates a four-piece mold 75 as shown in Figs. 6 and 7. The mold 75 is shown in a particular orientation which will be used for description, although a different orientation is possible. A stationary mold base 80 is shaped to provide a bottom planar surface 81 with an inner cylindrical surface 82 and an outer cylindrical surface 83. The inner cylindrical surface 82 leads up to a horizontal planar annular surface 84, which, in turn, leads out to a short cylindrical surface 85, and then to an inclined frustoconical portion 86. At the outer end of the portion 86 is a shelf 87 connected by a step 88 to a short case-engaging planar rest 89. From there, a radius portion 90 leads to a cylindrical portion 91 terminating at a planar shoulder 92. The outer edge of the shoulder 92 terminates at a frustoconical outer surface 93, at the lower end of which is a flash trap 94 followed by a planar shelf 95 leading to the outer cyclindrical surface 83.

A second, outer, mold member 100 is placed partly around and partly upon the base mold member 80. It has an outer generally cylindrical surface 101 and a lower flat annular face 102 which engages the annular shelf 95. It also has a frustoconical surface 103 bearing against the frustoconical surface 93 of the first mold member 80. Above that is a short cylindrical portion 104 going up to another frustoconical surface 105 that leads to an upper planar face 106 extends out to its outer surface 101.

The metal case 15 is preferably placed with its outer surface 21 bearing against the cylindrical portion 104 of the mold member 100 and with the surface 32 of its radial flange 30 resting upon the rest 89, while most of the inside surface 26 the case portion 15 is spaced away from the cylindrical portion 91.

A third, inner, mold member 110 has a stepped generally cylindrical inner through opening with a lower cylindrical surface 111, a step 112, and an upper cylindrical surface 113. A mold pin 114 has a head 115 engaging the step 112 and forcing a lower annular face 116 of the mold member 110 snugly against the annular surface 84. A cylindrical face 117 engages the cylindrical surface 85, and a frustoconical surface 118 engages and overlies the frustoconical surface 86 of the first mold member 80. However, the upper and outer end of the surface 118 is shaped to provide a cavity 120 between the two mold members 80 and 110 adjacent to the shelf 87. The cavity 120 provides the as-molded grease-retaining lip portion 40. At its upper end, the cavity 120 is terminated, and a frustoconical portion 121 leads upwardly to an inwardly extending ledge 122. The ledge 122 then leads to a nearly cylindrical tapered portion 123 ending in an annular planar portion 124 which leads in to the inner periphery 113.

A polytetrafluoroethylene washer 125, which preferably has been acid etched on one surface provided and then with a coating of bonding cement there and on its outer periphery 126, is placed on top of the ledge 122, with the etched and coated surface facing up and with its inner periphery 127 abutting the tapered portion 123. The washer 125 extends out beyond the ledge 122 and overhangs a portion of the frustoconical surface 121. A top the washer 125 is placed a ring 128 of uncured elastomer calculated to provide the proper amount for filling the molded cavities provided for the elastomer.

A fourth or upper mold member 130 is attached to an upper mold pin 131 having a head 132 that partially compresses a series of springs 133 against a lower shoulder 134 of the member 130. Like the first mold member 80, the member 130 has a flash receiving cavity 135 at the outer end of a planar lower face portion 136 and at the inner end of a tapered portion 137 that mates with the tapered portion 123 of the third mold member 110 when the mold 75 is in its closed position. At the lower end of the tapered portion 137 is a planar annular surface 138 leading to a frustoconical portion 140, the surfaces 138 and 140 defining part of the mold cavity for the dirt-excluding lip 41. The surface 140 is succeeded by a short radial portion 141 followed by a cylindrical step 142 leading to a short annular planar surface 143, from the outer end of which a tapered portion 144 leads outwardly and upwardly. The tapered portion 144 mates with the tapered portion 105 of the second mold member 100 and has another flash-receiving cavity 145 at its outer end. Beyond that is a planar surface 146 that mates with the surface 106 of the second mold member 100 and leads to an outer cylindrical surface 147.

When the heated mold is closed during the progress from the position shown in Fig. 6 to that of Fig. 7, the mold cavities are defined, and simultaneously the elastomer is caused to flow thereinto. If there is any excess elastomer it flows into the flash-receiving cavities 135 and 145. This flash is relatively easily removed from the molded seal. However, no flash forms on the as-molded lip 40. During this operation the elastomer and the fourth or upper mold member 130 act upon the polytetrafluoroethylene washer 125 to force its overhanging portion flush against the frustoconical surface 121 while bonding the elastomer to it. After the mold 75 is closed, it is held closed until cure of the elastomer has been completed, and then it is parted and the sealing member is ejected by conventional means.

As will be seen from the mold drawing, the inner portion of the polytetrafluoroethylene washer 125 and the elastomer there must be trimmed off. The trimming is along the line 150 in Fig. 8, leaving the edge 50 shown in Fig. 3, so that the inner periphery of the lip edge 52 is smaller in diameter than that of the grease-retaining lip edge 51, the trimming being made, as stated before, at an angle of about 30° to the plane of the radial flange 30 and, in any event, such that the surface 50 will become nearly a right angle when the seal is unitized.

The wear sleeve member 12 is made by conventional forming means to the desired shape, and is, as already been said, snapped into the oil seal member 11, so that the retaining members 38 thereafter hold it in place. The seal assembly 10 can, if actually need be, taken apart, but this is far from normal, and it is almost always left together. It will not come apart accidentally because of the retention members 38.

**Claims**

1. A unitized grease seal including a seal member (11) having a one-piece metal case (15) with a cylindrical outer portion (20) defining a wall with an outer surface (21) adapted to be press-fitted into a stationary bore and an inner surface (26), an inwardly extending radial flange (30) having a radially inner end (33), an outer face (31) on the air side of said seal and an opposite inner face (32) on the grease side of said seal, a molded elastomeric member (16) bonded to said metal case (15) and having a radially extending portion (35) bonded to said outer face (31) of said radial flange (30), said elastomeric member (16) having an inner portion extending radially inwardly of said radially inner end (33) of said radial flange (30) and bonded thereto and having two diverging lip portions (40, 41) with a cavity (44) therebetween, one of said lip portions (40) being on the greae side of the seal and providing a grease-retaining lip edge (42) and the other of said lip portions providing a dirt-excluding lip portion (41), a one-piece metal wear sleeve member (12) having a radially inner cylindrical portion (52) with an inner surface (53) adapted to be press fitted on a rotatable shaft and an outer surface (54) engaged by both said lip portions (40, 41) and having a larger outer diameter than the inner diameter of said lip portions (40, 41) before assembly with said wear sleeve (12), so that assembly of the wear sleeve (12) on the seal member (11) causes further spreading-apart of said two lip portions (40, 41), said wear sleeve member (12) also having a flange portion (57) extending radially outwardly from the air side end (56) of the wear sleeve's cylindrical portion (52) and an inturned portion (58) at an angle to said radial flange (57) and extending axially into the space between said inner surface (26) and inner end (33) of said radial flange (30), and the air-side end of said outer wall portion (20) of said metal case (15), housing retaining means (38) adapted for detachable engagment with said inturned portion (58) of the wear sleeve, characterized in that said elastomeric member (16) has an outer generally cylindrical portion (36) which together with the radially extending portion (35) completely covers the outer face (31) of said radial flange (30), said retaining means comprising a series of radially inwardly extending retaining portions (38) of said elastomeric member spaced circumferentially from each other and releasably engaging the outer end (59) of the inturned portion (58) of said wear sleeve (12) and further characterized in that the dirt-excluding lip portion (41) has a cylindrically extending recess (47, 48) therein, and a polytetrafluoroethylene sealing lip member (17) fitting in said recess (47, 48) and bonded to said elastomer member (16) and providing the sealing edge portion (51) of said dirt excluding lip portion (41).

2. The grease seal of claim 1, characterized in that the dirt-excluding lip portion (41) has an end wall (46, 50) on the air side which upon assembly of the wear sleeve (12) and the metal case (15) is disposed substantially perpendicular to the outer surface (54) of the wear sleeve (12).

3. The grease seal of claim 1 or 2, characterized in that the grease-retention lip edge (42) of said one lip portion (40) being provided with a series of spaced-apart shallow indentations (43) enabling passage of small amounts of grease into the cavity (44) between the lip portions (40, 41).

4. The grease seal of any of claims 1 to 3, characterized in that said metal case (15) includes a reverse cylindrical portion (24) extending back from one end (23) of said wall (20) and having an outer surface (25) bearing against said inner wall surface (26) and an inner surface (27), said reverse portion (24) being much shorter than said outer portion (20), and said inwardly extending radial flange (30) leading from the axially inner end (28) of said reverse portion (24) and said outer face (31) of said radial flange (30) being continuous with the inner face of said reverse portion (24), the outer cylindrical portion (36) of said elastomeric member (16) being bonded to and covering the inner surface (27) of said reverse portion (24).

5. The grease seal of any of claims 1 to 4, characterized in that said flange (61) of said wear sleeve (12) has a radial portion (61) where it meets the sleeve's cylindrical portion (62), extending beyond said dirt-extending lip portion (41), followed by an axially inwardly extending portion (63) going toward said case's radial flange (30), followed by a radially extending portion (64) parallel to said case's radial flange (30) and extending out radially beyond said retaining portions (38), followed by an axially outwardly and radially inwardly extending angular portion (65) ending substantially flush axially with the end of said bore-sealing portion (20, 73) and radially within said retainer portions (38).

6. The grease seal of any of claims 1 to 5, characterized in that said clyindrical outer portion (73) of said metal case (15) is stepped (72) and said elastomeric member (16) has a portion (70) extending from said outer generally cylindrical portion (36) to the outer surface (71) of said wall (73) and bonded thereto to provide a bore-engaging outer periphery.

**Patentansprüche**

1. Aus einer Baueinheit bestehende Fettdichtung mit einem Dichtungskörper (11), der ein einstückiges Metallgehäuse (15) mit einem Zylindrischen Außenteil (20) besitzt, der eine Wand bildet, deren Außenwandung (21) in einer Preßpassung in eine ortsfeste Bohrung einstzbar ist und die eine Innenwandung (26) besitzt, ferner mit einem einwärtsgerichteten Radialflansch (30), der ein radial einwärtsgelegenes Ende (33), eine äußere Fläche (31) auf der Luftseite der Dichtung und eine ihr entgegengesetzte innere Fläche (32) auf der Fettseite der Dichtung besitzt, ferner mit einem mit dem Metallgehäuse (15) stoffschlüssig verbundenen, formgepreßten elastomeren Element (16), das einen mit der Außenfläche (31) des radialen Flansches (30) stoffschlüssig verbundenen, radialen Teil (35) besitzt sowie einen inneren Teil, der sich von dem genannten radial einwärtsgelegenen Ende (33) des Radialflansches (30) radial einwärts erstreckt und damit stoffschlüssig verbunden ist und zwei divergierende Lippenteile (40, 41) besitzt, zwischen denen ein Hohlraum (44) angeordnet ist, wobei der eine (40) der Lippenteile auf der Fettseite der Dichtung angeordnet ist und einen Fett zurückhaltenden Lippenrand (42) besitzt und der andere Lippenteil einen schmutzabweisenden Lippenteil (41) bildet, ferner mit einer aus Metall bestehenden, einstückigen Verschleißhülse (12), die einen radial einwärtsgelegenen, zylindrischen Teil (52) besitzt, der eine Innenwandung (53) aufweist, die mit einer Preßpassung auf eine drehbare Welle aufschiebbar ist, und eine Außenwandung (54), an der die beiden genannten Lippenteile (40, 41) eingreifen und deren Außendurchmesser größer ist als der Innendurchmesser der Lippenteile (40, 41) vor dem Montieren der Verschleißhülse (12), so daß beim Montieren der Verschleißhülse (12) auf dem Dichtungskörper (11) die beiden Lippenteile (40, 41) weiter gespreizt werden, wobei die Verschleißhülse (12) ferner einen Flanschteil (57) besitzt, der sich von dem luftseitigen Ende (56) der des zylindrischen Teils (52) der Verschleißhülse radial auswärts erstreckt, und einen unter einem Winkel zu dem Radialflansch (57) einwärts abgewinkelten Teil (58), der sich axial in den Raum zwischen der Innenfläche (26) und dem inneren Ende (33) des Radialflansches (30) erstreckt, wobei ferner das luftseitige Ende des Außenwandteils (20) des Metallgehäuses (15) Haltemittel (38) umschließt, die zum lösbaren Angriff an dem einwärts abgewinkelten Teil (58) der Verschleißhülse geeignet sind, dadurch gekennzeichnet, daß das elastomere Element (16) einen allgemein zylindrischen äußeren Teil (36) besitzt, der zusammen mit dem sich radial erstreckenden Teil (35) die Außenfläche (31) des Radialflansches (30) vollkommen abdeckt, die Haltemittel eine Reihe von sich radial einwärts erstreckenden Halteteilen (38) des elastomeren Elements umfassen, die in der Umfangsrichtung in Abständen voneinander angeordnet sind und lösbar an dem äußeren Ende (59) des einwärts abgewinkelten Teils (58) der Verschleißhülse (12) angreifen, und dadurch gekennzeichnet, daß der schmutzabweisende Lippenteil (41) mit einer zylindrischen Vertiefung (47, 48) aus gebildet ist, in der ein aus Polytetrafluorethylen bestehendes Dichtungslippenelement (17) sitzt, das mit dem elastomeren Element (16) stoffschlüssig verbunden ist und den Dichtrandteil (51) des schmutzabweisenden Lippenteils (41) bildet.

2. Fettdichtung nach Anspruch 1, dadurch gekennzeichnet, daß der schmutzabweisende Lippenteil (41) auf der Luftseite eine Stirnwand (46, 50) besitzt, die nach dem Zusammensetzen der Verschleißhülse (12) und des Metallgehäuses (15) sich im wesentlichen rechtwinklig zu der Außenfläche (54) der Verschleißhülse (12) erstreckt.

3. Fettdichtung nach Anspruch 1 oder 2, dadurch gekennzeichnet, daß der Fett zurückhaltende Lippenrand (42) des genannten einen Lippenteils (40) mit einer Reihe von in Abständen voneinander angeordneten, seichten Einkerbungen (43) versehen ist, die einen Durchtritt von kleinen Fettmengen zwischen den Lippenteilen (40, 41) in den Hohlraum (44) gestatten.

4. Fettdichtung nach einem der Ansprüche 1 bis 3, dadurch gekennzeichnet, daß das Metallgehäuse (15) einen rückwärtsgerichteten zylindrischen Teil (24) besitzt, der sich von dem einen Ende (23) der genannten Wand (20) rückwärts erstreckt und eine Außenwandung (25) besitzt, die an der genannten Innenwandung (26) anliegt, und der ferner eine Innenwandung (27) besitzt, wobei der rückwärtsgerichtete Teil (24) viel kürzer ist als der äußere Teil (20) und der einwärtsgerichtete Radialflansch (30) sich von dem axial inneren Ende (28) des rückwärtsgericteten Teils (24) weg erstreckt, die Außenfläche (31) des Radialflansches (30) an die Innenwandung des rückwärtsgerichteten Teils (24) anschließt und der äußere zylindrische Teil (36) des elastomeren Elements (16) mit der Innenwandung (27) des rückwärtsgerichteten Teils (24) stoffschlüssig verbunden ist und sie abdeckt.

5. Fettdichtung nach einem der Ansprüche 1 bis 4, dadurch gekennzeichnet, daß der Flansch (61) der Verschleißhülse (12) einen radialen Teil (61) besitzt, mit dem er an den zylindrischen Teil (62) der Hülse anschließt und der sich über den schmutzabweisenden Lippenteil (41) hinaus erstreckt und an den eine Teil (63) anschließt, der sich axial zu dem Radialflansch (30) des Gehäuses hin erstreckt und an den ein zu dem Radialflansch (3) des Gehäuses paralleler, radialer Teil (;64) anschließt, der sich radial auswärts über die Halteteile (38) hinaus erstreckt und an den ein sich axial auswärts und radial einwärts schräg erstrekkender Teil (65) anschließt, dessen Ende mit dem Ende des Bohrungsdichtungsteils (20, 73) axial bündig und radial einwärts von den Halteteilen (38) angeordnet ist.

6. Fettdichtung nach einem der Ansprüche 1 bis 5, dadurch gekennzeichnet, daß der zylindrische äußere Teil (73) des Metallgehäuses (15) abgestuft (72) ist und das elastomere Element (16) einen Teil (70) besitzt, der sich von dem allgemein zylindrischen äußeren Teil (36) zu der Außenwandung (71) der genannten Wand (73) erstreckt und zur Bildung einer an der Bohrung anliegenden Außenumfangsfläche stoffschlüssig mit der Außenwandung (71) verbunden ist.

**Revendications**

1. Joint unifié d'étanchéité à la graisse comprenant un élément de joint (11) comportant un boîtier métallique d'une seule pièce (14) avec une partie extérieure cylindrique (20) constituant une paroi avec une surface extérieure (21) adaptée pour être emmanchée à force dans un alésage fixe et une surface intérieure (26), une bride radiale (30) orientée vers l'intérieur ayant une extrémité intérieure dans la direction radiale (33), une face extérieure (31) sur la face dudit joint du côté de l'air et une face interne opposée (32) sur le côté graisse dudit joint, un élément en élastomère moulé (16) fixé audit boîtier métallique (15) et comportant une partie orientée radialement (35) fixée à ladite face extérieure (31) de ladite bride radiale (30), ledit élément en élastomère (16) ayant une partie intérieure que s'étend radialement vers l'intérieur de ladite extrémité radialement intérieure (33) de ladite bride radiale (30) et fixée sur cette partie et comportant deux partie de lèvres divergentes (40, 41) séparées par une cavité (44), la première desdites portions de lèvres (40) se trouvant du côté graisse du joint et constituant un bord formant lèvre retenant la graisse (42) et la seconde desdites portions de lèvre constituant une portion de lèvres repoussant la poussière (41), un élément de manchon d'usure en métal d'une seule pièce (12) comportant une portion cylindrique radialement intérieure (52) avec une surface intérieure (53) adaptée pour être montée à force sur un arbre tournant et une surface extérieure (54) avec laquelle viennent en prise lesdites deux parties de lèvres (40, 41) et ayant un diamètre extérieur plus grand que le diamètre intérieur desdites portions de lèvres (40, 41) avant l'assemblage avec ledit manchon d'usure (12), de façon que l'ensemble du manchon d'usure (12) sur l'élément de joint (11) entraîne une plus grande séparation par étalement des deux portions de lèvres (40, 41), ledit élément de manchon d'usure (12) comportant aussi une partie de bride (57) orientée radialement vers l'extérieur à partir de l'extrémité du côté air (56) de la portion cylindrique du manchon d'usure (52) et une portion retournée (58) sous un certain angle par rapport à ladite bride radiale (57) et s'étendant dans la direction axiale à l'intérieur de l'espace séparant ladite surface intérieure (26) et l'extrémité intérieure (33) dudit boîtier métallique (15) et l'extrémité du côté air de ladite portion de paroi extérieure (20) dudit boîtier métallique (15), logeant des moyens de retenue (38) adaptés pour un engagement amovible avec ladite partie tournée vers l'intérieur (58) du manchon d'usure, caractérisé par le fait que ledit élément en élastomère (16) comporte une partie extérieure généralement cylindrique (36) qui en même temps que la portion s'étendant radialement (35) recouvre complètement la face extérieure (31) de ladite bande radiale (30), lesdits moyens de retenue comprenant une série de parties de retenue orientées radialement vers l'intérieur (38) dudit élément en élastomère espacés l'un de l'autre le long de la circonférence et emboîtant de manière amovible l'extrémité extérieure (59) de la portion retournée (58) dudit manchon d'usure (12) et caractérisé en outre par le fait que la portion de lèvre repoussant la poussière (41) comporte un logement cylindrique (47, 48) orienté à l'intérieur, et un élément de lèvre d'étanchéité en polytétrafluoréthylène (17) s'adaptant à l'intérieur dudit logement (47, 48) et fixé audit élément en élastomère (16) et constituant la partie (51) de la lèvre d'étanchéité de ladite partie de lèvre (41) repoussant la poussière.

2. Joint d'étanchéité à la graisse selon la revendication 1, caractérisé par le fait que la portion de lèvre repoussant la poussière (41) comporte une paroi d'extrémité (46, 50) du côte de l'air qui, au moment du montage du manchon d'usure (12) et du boîtier métallique (15) est orientée dans une direction sensiblement perpendiculaire à la surface extérieure (54) du manchon d'usure (12).

3. Joint d'étanchéité à la graisse selon la revedication 1 ou 2, caractérisé par le fait que le bord de la lèvre de rétention de la graisse (42) de ladite première portion de lèvre (40) comporte une série de dents peu profondes espacées l'une de l'autre (43) laissant le passage à de petites quantités de graisse vers l'intérieur de la cavité (44) entre les portions de lèvres (41, 41).

4. Joint d'étanchéité à la graisse selon l'une quelconque des revendications 1 à 3, caractérisé par le fait que ledit boîtier métallique (15) comporte une partie cylindrique inversée (24) s'étendant de l'arrière jusqu'à une extrémité (23) de ladite paroi (20) et comportant une surface extérieure (25) appuyant contre ladite surface de paroi intérieure (26) et une surface intérieure (27), ladite portion inversée (24) étant beaucoup plus courte que ladite portion extérieure (20), et ladite bride orientée radialement vers l'intérieur (30) allant depuis l'extrémité axialement intérieure (28) de ladite portion inverse (24) et ladite face extérieure (31) de ladite bride radiale (30) étant en continuité avec la face intérieure de ladite portion inverse (24), la partie cylindrique extérieure (36) dudit élément en élastomère (16) étant liée à la surface interne (27) de ladite portion inverse (24) et la recouvrant.

5. Joint d'étanchéité à la graisse selon l'une quelconque des revendications 1 à 4, caractérisé par le fait que ladite bride (61) dudit manchon d'usure (12) comporte une portion radiale (61) à l'endroit où il rejoint la portion cylindrique du manchon (62), s'étendant au-delà de ladite portion de lèvre repoussant la poussière (41), suivie par une portion s'étendant axialement vers l'intérieur (63) en direction de ladite bride radiale du boîtier (30), suivie par une portion s'étendant radialement (64) parallèle à ladite bride radiale du boîtier (30) et s'étendant radialement vers l'extérieur au-delà des portions de retenue (38), suivie d'une portion angulaire s'étendant axialement vers l'extérieur et radialement vers l'intérieur (65) se terminant sensiblement à ras dans la direction axiale de l'extrémité de ladite portion d'étanchéité de l'arbre (20, 73) et radialement desdites portions de retenue (38).

6. Joint d'étanchéité à la graisse selon l'une quelconque des revendications 1 à 5, caractérisé par le fait que la portion cylindrique extérieure (73) dudit boîtier métallique (15) est échelonnée (72) et par le fait que ledit élément élastomère (16) comporte une partie (70) s'étendant de ladite partie cylindrique généralement extérieure (36) jusqu'à la surface extérieure (71) de ladite paroi (73) et lui est associée pour former une pérphérie extérieure venant en prise avec l'alésage.

FIG. 1

FIG. 2

FIG. 8

FIG. 5

FIG. 3

FIG. 4

FIG. 6

FIG.7